# EUROPÄISCHE PATENTSCHRIFT

(11) **EP 1 092 899 B1**
(45) Veröffentlichungstag und Bekanntmachung des Hinweises auf die Patenterteilung: **21.12.2005**
(21) Anmeldenummer: 00122165.4
(22) Anmeldetag: 12.10.2000
(51) Int. Cl.: F16J 15/08

(54) **Vorrichtung zur Abdichtung**
Sealing device
Dispositif d'étanchéité

(30) Priorität: 13.10.1999 DE 19949370
(43) Veröffentlichungstag der Anmeldung: 18.04.2001
(73) Patentinhaber: Janich GmbH & Co., 59269 Beckum (DE)
(72) Erfinder: Janich, Hans-Jürgen, 96271 Grub am Forst (DE)
(74) Vertreter: Tetzner, Michael

(56) Entgegenhaltungen:
- EP-A- 0 526 748
- US-A- 3 154 311
- US-A- 3 591 963
- US-A- 4 527 773
- US-A- 5 667 226

## Beschreibung

Die Erfindung betrifft eine Vorrichtung zur Abdichtung der Berührungszone zwischen zwei relativ zueinander beweglichen Anlagenteilen, enthaltend ein sich entlang der Berührungszone erstreckendes, am ersten Anlagenteil befestigtes Dichtungselement sowie eine am zweiten Anlagenteil vorgesehene und in einer Schließstellung der beiden Anlagenteile mit dem Dichtungselement in Berührung kommende Gegenfläche.

Vorrichtungen dieser Art werden beispielsweise bei Absperrelementen, wie Schwenkflügel, Drehflügel oder Schieberplatten, vorgesehen, die in Heißgasrohrleitungen großer Abmessungen vorgesehen sind und dort in der Schließstellung eine zuverlässige gasdichte Abdichtung gewährleisten. Das dabei zum Einsatz kommende Dichtungselement muss über einen ausreichend großen Federweg verfügen, um Unebenheiten an der Gegenfläche und Materialausdehnungen aufgrund des Heißgases ausgleichen zu können.

Aus der Praxis sind daher die verschiedensten Querschnittsformen für das Dichtungselement bekannt.

Üblicherweise wird das Dichtungselement durch einen langgestreckten Federstahlstreifen gebildet, der zwei ebene Längskantenbereiche sowie eine zwischen diesen ebenen Längskantenbereichen angeordnete, quer zur Längsrichtung des Federstahlstreifens bogenförmig gekrümmte Zonen aufweist, wobei das Dichtungselement in der Schließstellung beider Anlagenteile mit einem Teilbereich dieser gekrümmten Zone federnd an der Gegenfläche anliegt. In einer bekannten Ausführung dieser Art stellen die beiden ebenen Längskantenbereiche des Dichtungselements eine geradlinige Verlängerung der bogenförmig gekrümmten Zone dar, wobei die beiden ebenen Längskantenbereiche in einer gesonderten Klemmeinrichtung eingespannt werden. Bei dieser Ausführung sind jedoch die beträchtliche Bauhöhe sowie eine schwierige Montage besonders nachteilig.

Aus der EP-A-0 340 430 ist ein Dichtungselement bekannt, das wenigstens eine Abkantung zwischen einem Längskantenbereich und der gekrümmten Zone aufweist und im übrigen so geformt ist, dass die beiden Längskantenbereiche übereinanderliegend nach der gleichen Seite weisen und zusammen mittels einer Klemmeinrichtung eingespannt sind. Durch die Abkantung eines oder beider Längskantenbereiche kann die Bauhöhe deutliche reduziert werden.

Ein geeignetes Dichtungselement, insbesondere für Heißgasrohrleitungen, muss nicht nur genügend Elastizität, also einen ausreichend großen Federweg zum Ausgleichen der zu erwartenden thermischen Dehnungen aufweisen, sondern muss darüber hinaus auch eine ausreichende Steifigkeit besitzen. Solange das Dichtungselement nicht an der Gegenfläche anliegt, ist dieses nämlich einer außerordentlich starken Strömung des Heißgases ausgesetzt. Vor allem während des Schließvorganges erhöht sich die Strömungsgeschwindigkeit erheblich, so dass es zu Eigenschwingungen des Dichtungselements kommen kann. Auf Dauer können derartige Eigenschwingungen zu Beschädigungen oder Brüchen des Dichtungselements führen. In der Praxis hat sich gezeigt, dass diesbezüglich abgekantete Dichtungselemente besonders gefährdet sind.

Aus der DE-C-198 28 896 ist ein Dichtungselement bekannt, das durch einen sich entlang der Berührungszone erstreckenden Federstahlblechstreifen gebildet ist, der hohlprofilförmig gebogen ist und dessen beide Längskanten Spannränder bilden, die an einem der beiden Anlagenteile mit einem Abstand zueinander, der mindestens 10 % der Breite des Dichtungselements beträgt, eingespannt sind, wobei das Dichtungselement in der Schließstellung des Absperrelements mit einer gegenüber dem Dichtsitz konvex gekrümmten Dichtungszone durch Federwirkung mit einer Dichtkraft an dem Dichtsitz anliegt. Die Dichtzone dieses Federstahlblechstreifens ist durch plastische Verformung in Form eines Dachfirstes mit sich beidseitig anschließenden Dachflächen gebogen, wobei die beiden Dachflächen in einem Winkel von 60° bis 160° zueinander ausgerichtet sind. An der dem Dachfirst abgewandten Längskante der beiden Dachflächen ist jeweils eine weitere durch plastische Verformung erzeugte, nach außen hin konvexe Biegung angebracht, an die sich eine zumindest in einem ersten Teilstück ebene Seitenfläche anschließt, an deren freien Längskante jeweils der Spannrand angeformt ist. Ein derartiges Dichtungselement ermöglicht erheblich größere Federwege als bisher, insbesondere Federwege bis zu 30 mm, ohne dass die Steifigkeit des Dichtungselements in unzulässiger Weise abnimmt. Dennoch können auch bei diesem Element Eigenschwingungen aufgrund der hohen Gasgeschwindigkeiten, insbesondere während des Schließvorgangs, nicht vermieden werden. Somit sind auch bei diesem Dichtungselement die abgekanteten Bereiche aufgrund der Eigenschwingungen im besonderen Maße gefährdet.

In bestimmten Fällen, in denen eine hundertprozentige Abdichtung erforderlich ist, werden zwei Dichtungselemente nebeneinander angeordnet, wobei in den Zwischenraum Sperrluft eingeblasen wird. Um eine zuverlässige Abdichtung zu gewährleisten, muss die Sperrluft mit einem gegenüber dem Heißgasstrom höheren Druck eingeblasen werden. Die Abdichtvorrichtung gemäß DE-C-198 28 896 ist für derartige Anwendungsfälle jedoch weniger geeignet, da sich die relativ großen Dachflächen bei höherem Druck nach innen wölben und dann zum Ablösen des Dichtungselements von der Gegenfläche führen können.

Aus der US-A-4 527 773 ist eine Abdichtungsvorrichtung bekannt, bei der ein im Querschnitt kreisförmiges elastisches Dichtungselement eingesetzt wird. Zur Stabilisierung ist eine äußere Halterung vorgesehen, die nach innen geneigte Beine aufweist, die zwischen sich das Dichtungselement fixieren.

Aus der US-A-3 591 963 ist ein Dichtungselement bekannt, das durch einen aufblasbaren Schlauch gebildet wird. Ein im Inneren des Schlauches angeordnetes Federelement dient zum Entlüften des Schlauches.

In der US-A-3 154 311 ist ein spiralförmig gewickeltes Dichtungselement dargestellt.

Der Erfindung liegt daher die Aufgabe zugrunde, eine Vorrichtung zur Abdichtung der Berührungszone zwischen zwei relativ zueinander beweglichen Anlagenteilen anzugeben, die sich durch eine gute Abdichtung auszeichnet.

Erfindungsgemäß wird diese Aufgabe durch die Merkmale der Ansprüche 1 und 8 gelöst.

Weitere Ausgestaltungen der Erfindung sind Gegenstand der Unteransprüche.

Das Dichtungselement weist im Hohlprofilkörper angeordnete und am ersten Anlagenteil befestigte Mittel zur Stabilisierung des Hohlprofilkörpers auf. Auf diese Weise können Eigenschwingungen des Dichtungselements in der Öffnungsstellung vermieden bzw. reduziert werden.

Außerdem wird das Dichtungselement durch einen federelastischen Hohlkörper gebildet, der - in einer Öffnungsstellung - quer zu seiner Längserstreckung einen kreisförmigen Querschnitt aufweist und sich mit einem Teilbereich in der Schließstellung der beiden Anlagenteile federnd an die Gegenfläche anlegt.

Der kreisförmige Querschnitt ermöglicht sehr große Federwege, um insbesondere thermische Dehnungen infolge des Temperatureinflusses etwaiger Heißgase kompensieren zu können. Da das Dichtungselement außerdem keine Abkantungen aufweist, zeichnet es sich zudem durch eine lange Lebensdauer aus.

Der Hohlprofilkörper wird durch ein im Querschnitt geschlossenes Profil aus Federstahl gebildet.

In einem erfindungsgemäßen Ausführungsbeispiel ist im Inneren des Hohlprofilkörpers wenigstens eine Klemmleiste vorgesehen, die über Aussparungen im Hohlprofilkörper am ersten Anlagenteil zur Einspannung des Dichtungselements befestigt ist.

Gemäß einem weiteren Ausführungsbeispiel enthält die Vorrichtung zur Abdichtung der Berührungszone zwischen zwei relativ zueinander beweglichen Anlagenteilen ein sich entlang der Berührungszone erstreckendes, am ersten Anlagenteil befestigtes Dichtungselement sowie eine am zweiten Anlagenteil vorgesehene und in einer Schließstellung der beiden Anlagenteile mit dem Dichtungselement in Berührung kommende Gegenfläche, wobei das Dichtungselement durch einen federelastischen Hohlprofilkörper gebildet wird, der quer zu seiner Längserstreckung einen in einer Öffnungsstellung der beiden Anlagenteile bogenförmig gekrümmten Teilbereich aufweist, der sich in der Schließstellung der beiden Anlagenteile federnd an die Gegenfläche anlegt. Die Gegenfläche weist im Bereich der Berührungszone mit dem Dichtungselement Mittel zur Zuführung von Sperrluft auf. Auf diese Weise kann eine hundertprozentige Abdichtung der Berührungszone zwischen den beiden Anlagenteilen erreicht werden.

Weist der Hohlprofilkörper zudem - in einer Öffnungsstellung - quer zu seiner Längserstreckung einen kreisförmigen Querschnitt auf, ergibt sich eine relativ breite Berührungszone zwischen den beiden Anlagenteilen, um genügend Bauraum für die Mittel zur Zuführung der Sperrluft zu gewährleisten.

Die Mittel zur Zuführung der Sperrluft werden zweckmäßigerweise durch einen entlang der Berührungszone verlaufenden Schlitz gebildet.

Weitere Ausgestaltungen und Vorteile der Erfindung werden anhand der Beschreibung einiger Ausführungsbeispiele und der Zeichnung näher erläutert.

In der Zeichnung zeigen
- Fig.1: eine schematische Schnittdarstellung der Vorrichtung zur Abdichtung, bei der es sich nicht um ein Ausführungsbeispiel der Erfindung handelt, sondern um ein Beispiel, um das Verständnis der Erfindung zu erleichtern,
- Fig.2: eine schematische Schnittdarstellung der Vorrichtung zur Abdichtung gemäß einem zweiten Ausführungsbeispiel,
- Fig.3: eine schematische Schnittdarstellung des Dichtungselements gemäß einem dritten Ausführungsbeispiel,
- Fig.4: eine schematische Schnittdarstellung des Dichtungselements gemäß einem vierten Ausführungsbeispiel,
- Fig.5: eine dreidimensionale Darstellung im Verbindungsbereich zweier Dichtungselemente,
- Fig.6A und 6B: eine schematische Darstellung einer Drehflügelklappe in der Öffnungs- bzw. Schließstellung der Drehflügel,
- Fig.7: eine geschnittene Teilansicht zweier Drehflügel in der Schließstellung gemäß einer ersten Variante,
- Fig.8: eine geschnittene Teilansicht zweier Drehflügel in der Schließstellung gemäß einer zweiten Variante,
- Fig.9: eine Schnittdarstellung einer Anlage mit einer Schwenkflügelklappe und
- Fig.10: eine Schnittdarstellung des Details X der Fig.9.

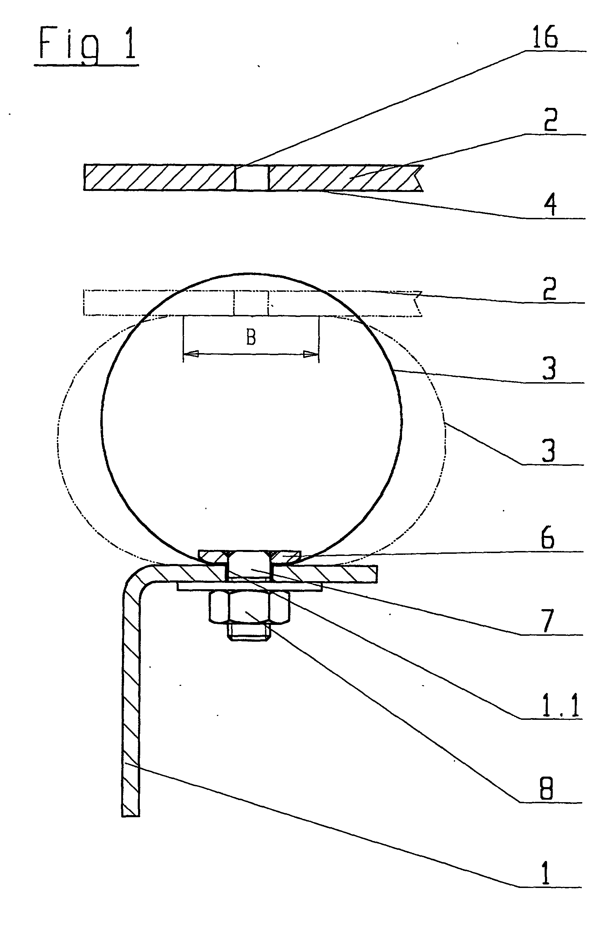

Fig. 1 stellt eine Vorrichtung zur Abdichtung der Berührungszone zwischen zwei relativ zueinander beweglichen Anlagenteilen 1, 2 dar. Sie enthält ein sich entlang der Berührungszone erstreckendes, am ersten Anlagenteil 1 befestigtes Dichtungselement 3 sowie eine am zweiten Anlagenteil 2 vorgesehene und in einer Schließstellung der beiden Anlagenteile 1, 2 mit dem Dichtungselement 3 in Berührung kommende Gegenfläche 4.

Das Dichtungselement 3 wird durch einen federelastischen Hohlkörper gebildet, der in der mit durchgezogenen Linien in Fig.1 dargestellten Öffnungsstellung, quer zur Längserstreckung einen kreisförmigen Querschnitt aufweist. In der mit gestrichelten Linien dargestellten Schließstellung kommt ein bogenförmig gekrümmter Teilbereich des Dichtungselementes 3 mit der Gegenfläche 4 federnd in Berührung und legt sich an die Gegenfläche an. In der Schließstellung ergibt sich dadurch eine Berührungszone mit der Breite B.

Der Hohlprofilkörper des Dichtungselements 3 wird zweckmäßigerweise durch ein im Querschnitt geschlossenes Profil aus Federstahl gebildet. Zur Befestigung des Dichtungselements 3 am ersten Anlagenteil 1 weist das Dichtungselement Aussparungen auf, durch die geeignete Mittel zur Befestigung des Dichtungselements am ersten Anlagenteil hindurchgreifen.

Im dargestellten Beispiel ist im Inneren des Dichtungselements 3 eine Klemmleiste 6 vorgesehen, die über Aussparungen im Hohlprofilkörper des Dichtungselements 3 am ersten Anlagenteil 1 zur Halterung des Dichtungselements befestigt ist. Die Klemmleiste 6 weist dabei beispielsweise eine Vielzahl von in seiner Längsrichtung voneinander beabstandeten Gewindebolzen auf, die durch entsprechende Aussparungen im Hohlprofilkörper des Dichtungselements 3 und durch entsprechende Aussparungen 1.1 im ersten Anlagenteil hindurchgreifen. Zur Befestigung der Leiste werden dann entsprechende Muttern 8 auf die hindurchgesteckten Gewindebolzen 7 aufgeschraubt. Das Dichtungselement 3 wird dabei zwischen der Klemmleiste 6 und dem ersten Anlagenteil 1 fest eingespannt.

Der kreisförmige Querschnitt des Dichtungselements 3 ermöglicht einen großen Federweg, so dass thermische Dehnungen infolge des Temperatureinflusses eines etwa vorhandenen Heißgases zuverlässig kompensiert werden können. So ist beispielsweise bei einem Dichtungselement mit einem Durchmesser von 60 mm im unbelasteten Zustand ein Federweg von etwa 30 mm möglich. Die sich dabei ergebende relativ große Breite B der Berührungszone gewährleistet zudem eine zuverlässige Abdichtung.

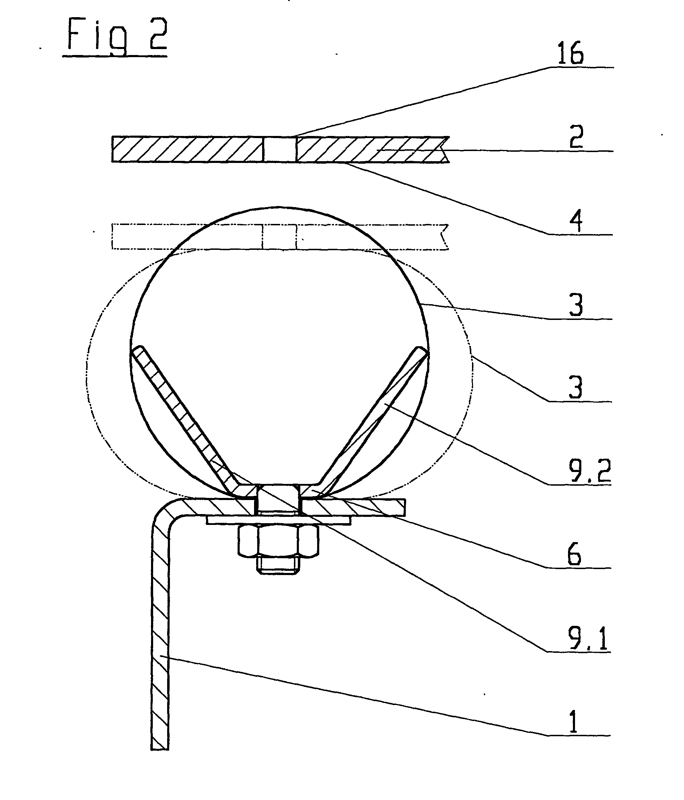

Das in Fig.2 dargestellte Ausführungsbeispiel unterscheidet sich von der Variante gemäß Fig.1 nun dadurch, dass zusätzliche Mittel zur Stabilisierung des Dichtungselements 3 vorgesehen sind. Die Stabilisierungsmittel sind am ersten Anlagenteil 1 befestigt und werden zweckmäßigerweise einstückig mit der Klemmleiste ausgebildet. Im dargestellten Ausführungsbeispiel weisen die Stabilisierungsmittel zwei Schenkel 9.1 und 9.2 auf, die in der Öffnungsstellung der beiden Anlagenteile 1, 2 mit ihren Endbereichen an gegenüberliegenden Bereichen der Innenwandung des Dichtungselements 3 anliegen. Dadurch werden Eigenschwingungen des Dichtungselements 3 auch bei hohen Strömungsgeschwindigkeiten vermieden bzw. reduziert. Anstelle des in der Querschnittsdarstellung gemäß Fig.2 etwa V-förmig ausgebildeten Stabilisierungsmittels sind auch andere Querschnittsformen, beispielsweise eine T-Form denkbar.

In der in Fig.2 mit gestrichelten Linien dargestellten Schließstellung kommen die Schenkel 9.1 und 9.2 normalerweise nicht mit der Innenwandung des Dichtungselementes in Berühung. Bei sehr großen einseitigen Drücken kann es jedoch zu einer Verschiebung des Dichtungselementes kommen, so daß die Innenwandung dann an einem der beiden Schenkel wieder anliegt. Versuche haben jedoch gezeigt, daß die dargestellte Dichtung selbst bei Drücken von 120 mbar noch stabil ist. Erst bei größeren Drücken wirkt einer der beiden Schenkel als Stütze und verhindert dadurch ein Abheben der Dichtung.

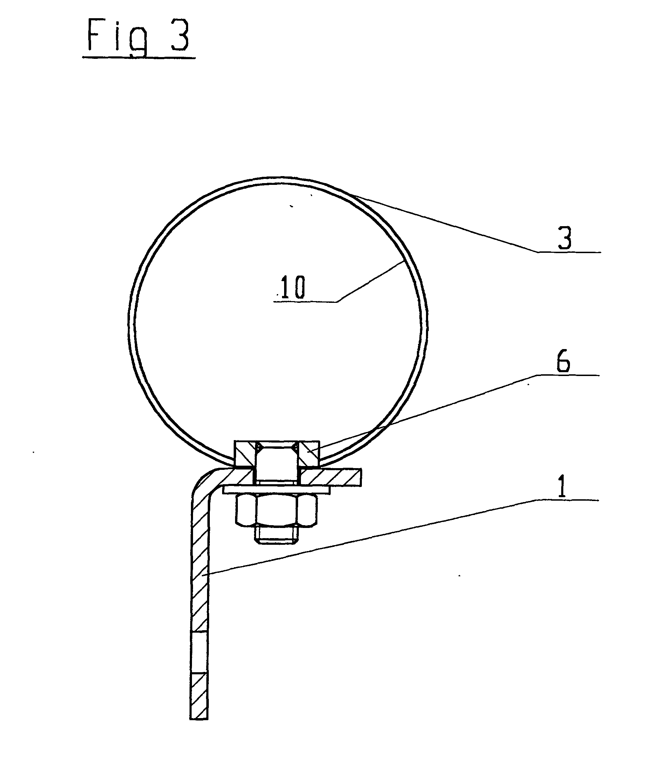

Das Dichtungselement 3 gemäß Fig.3 entspricht wiederum dem Ausführungsbeispiel gemäß Fig.1, wobei jedoch ein zusätzliches Federstahlblech 10 in den Hohlprofilkörper des Dichtungselements 3 eingeschoben ist, wobei das Federstahlblech 10 an der Innenwandung des Hohlprofilkörpers anliegt. Durch dieses zusätzliche Federstahlblech 10 läßt sich die Federkraft des Dichtungselements erhöhen. Da das Federstahlblech 10 lediglich eingeschoben werden muß, kann die Federkraft im Bedarfsfalle auch nachträglich erhöht bzw. angepaßt werden.

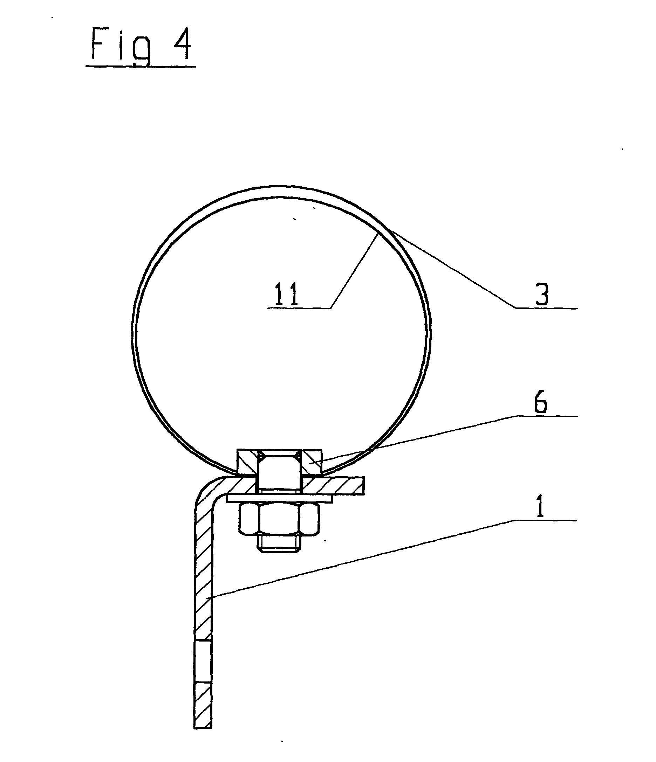

Das Ausführungsbeispiel gemäß Fig.4 zeigt wiederum das Dichtungselement 3 gemäß Fig.1, wobei im Dichtungselement 3 ein zweiter innerer Hohlprofilkörper 11 mit kleinerer Querschnittsform angeordnet ist. Auch der zweite Hohlprofilkörper 11 weist vorzugsweise einen kreisförmigen Querschnitt auf. Das Dichtungselement 3 und der zweite Hohlprofilkörper 11 werden zweckmäßigerweise zusammen durch die Klemmleiste 6 am ersten Anlagenteil eingespannt.

Der zweite Hohlprofilkörper 11 ist derart im Inneren des Dichtungselements 3 angeordnet, daß beim Schließvorgang zunächst der äußere Hohlprofilkörper bei Berührung mit der Gegenfläche 4 verformt wird und mit zunehmender Verformung des äußeren Hohlprofilkörpers auch der zweite Hohlprofilkörper 11 verformt wird. Die in Fig.4 dargestellte Abdichtvorrichtung ist somit, solange sich nur das Dichtungselement 3 verformt, zunächst weicher und wird dann bei zusätzlicher Verformung des zweiten Hohlprofilkörpers 11 deutlich härter.

Der erste Anlagenteil 1 ist zweckmäßigerweise im Bereich der Befestigung des Dichtungselements 3 derart ausgebildet, daß sich das Dichtungselement 3 in der Schließstellung am ersten Anlagenteil abstützt.

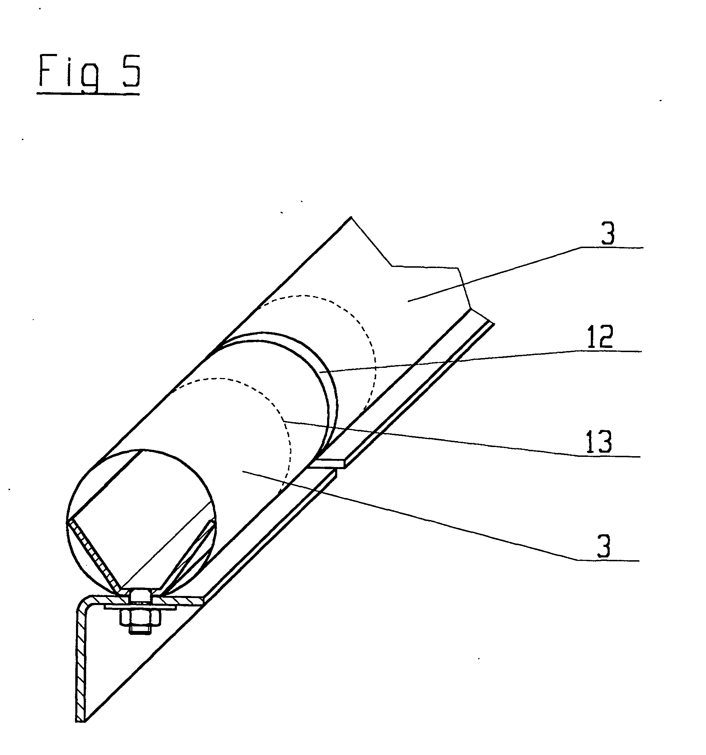

Die oben beschriebenen Abdichtvorrichtungen werden beispielsweise für Schwenk- oder Drehflügelklappen eingesetzt, deren Breite und Höhe bzw. Länge bis zu 10 m oder mehr betragen können. Aus fertigungstechnischen Gründen einerseits und um andererseits die Montage zu erleichtern, werden die Dichtungselemente 3 zweckmäßigerweise in einer Vielzahl von hintereinander angeordneten Stücken von beispielsweise einem Meter montiert (siehe Fig.5). Um thermische Längsausdehnungen der Dichtungselemente 3 zu ermöglichen, wird zwischen zwei benachbarten Dichtungselementen ein Spalt 12 freigelassen. Um dennoch eine gasdichte Abdichtung zu gewährleisten, wird eine Verbindungsmuffe 13 jeweils zur Hälfte in beide Dichtungselemente 3 eingeschoben. Die Verbindungsmuffe 13 wird zweckmäßigerweise ebenfalls aus Federstahl hergestellt.

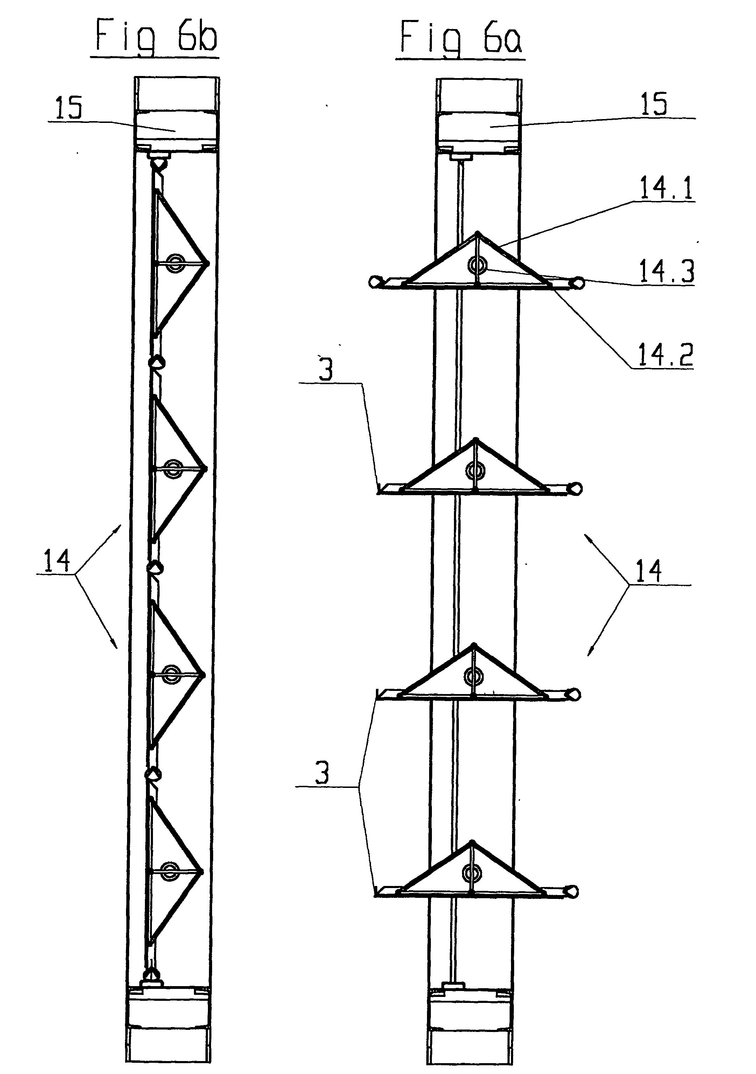

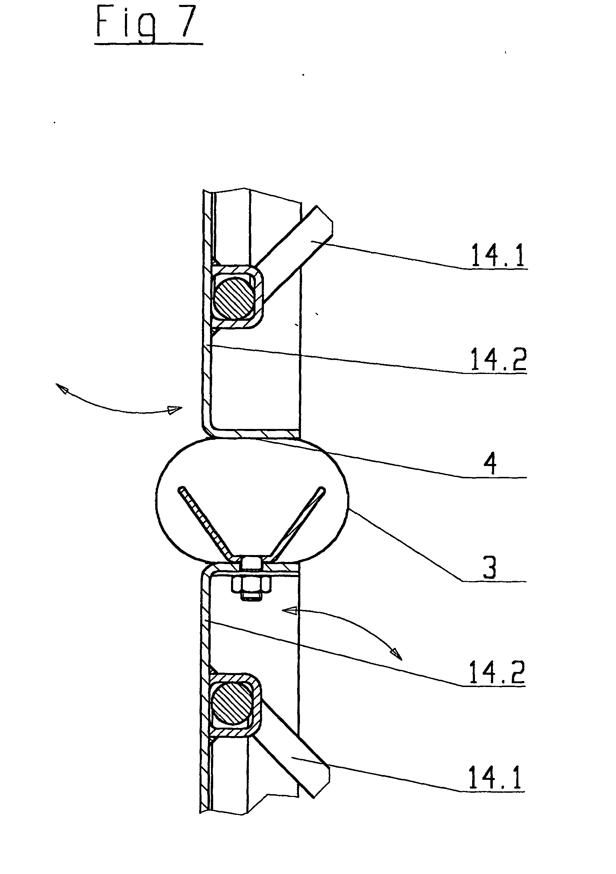

In den Fig.6A und 6B ist eine Drehflügelklappe mit vier jalousieartig verschwenkbaren Drehflügeln 14 in der Öffnungs- bzw. Schließstellung dargestellt. Die Drehflügel bestehen im dargestellten Ausführungsbeispiel aus einem Gitterwerk 14.1, einem Flügelblech 14.2 und einer Schwenkachse 14.3. Die Drehflügel sind mit ihren Schwenkachsen 14.3 in einem Rahmen 15 gelagert. Zur Abdichtung der Berührungszone zwischen benachbarten Drehflügeln bzw. einem Drehflügel und dem Rahmen 15 sind Abdichtvorrichtungen gemäß der oben beschriebenen Art vorgesehen. Eine Detailansicht im Bereich der Abdichtvorrichtung zwischen zwei Drehflügeln 14 ist in Fig.7 näher dargestellt. Dabei ist das Dichtungselement 3 an einem der beiden Drehflügel 14 angeordnet, während die Gegenfläche am anderen Drehflügel vorgesehen ist. Die Dichtungsvorrichtung ist jedoch nicht auf das in Fig.7 dargestellte Ausführungsbeispiel beschränkt. So können beispielsweise auch die in den Fig.1, 3 und 4 veranschaulichten Varianten vorgesehen werden. Wie das Ausführungsbeispiel der Drehflügelklappe zeigt, kann die Dichtungsvorrichtung sowohl zwischen zwei beweglichen Anlagenteilen (Drehflügeln 14) als auch zwischen einem beweglichen Anlagenteil (Drehflügel 14) und einem festen Anlagenteil (Rahmen 15) angeordnet werden.

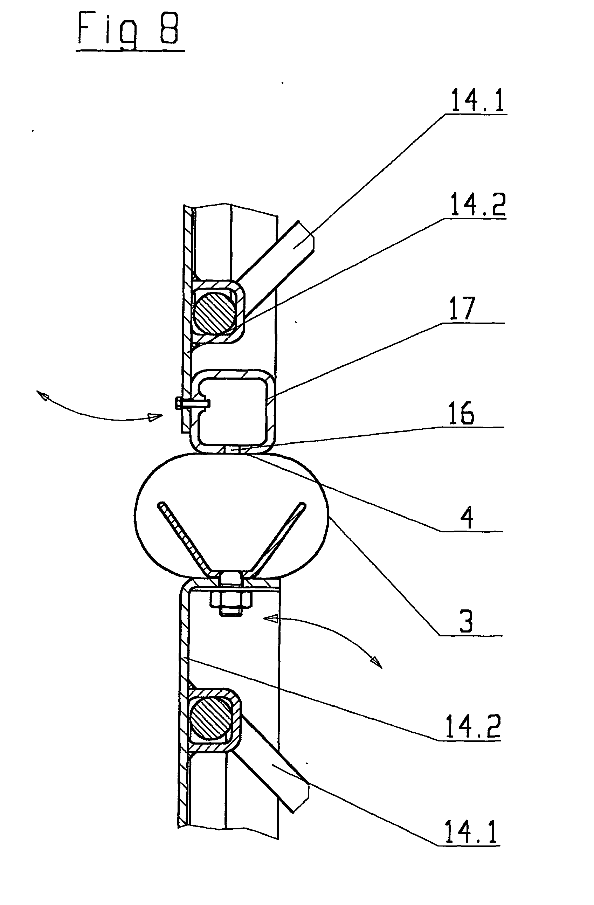

Fig.8 zeigt eine weitere Ausgestaltung der in Fig.7 dargestellten Abdichtvorrichtung. Die Besonderheit dieser Ausführungsform besteht darin, daß in der Gegenfläche 4 entlang der Berührungszone Mittel zur Zuführung von Sperrluft vorgesehen sind. Diese Mittel werden zweckmäßigerweise durch einen Schlitz 16 gebildet; durch den Sperrluft in den Bereich der Berührungszone gepreßt werden kann. Die Gegenfläche 4 wird dabei zweckmäßigerweise durch eine Außenfläche eines Hohlprofilkörpers 17 gebildet, der einen in der Außenfläche mündenden und sich entlang der Berührungszone erstreckenden Schlitz 16 aufweist. Der Hohlprofilkörper 17 wird beispielsweise durch ein Vierkantrohr ausgeführt.

Durch den großen Federweg des im Querschnitt kreisförmigen Dichtungselements 13 bildet sich an der entsprechenden Gegenfläche eine relativ breite Berührungszone aus, die sich für die Zuführung der Sperrluft im besonderen Maße eignet. Das Dichtungselement 3 sollte sich daher in der Schließstellung derart verformen, daß es sich plan an die ebene Gegenfläche anlegt.

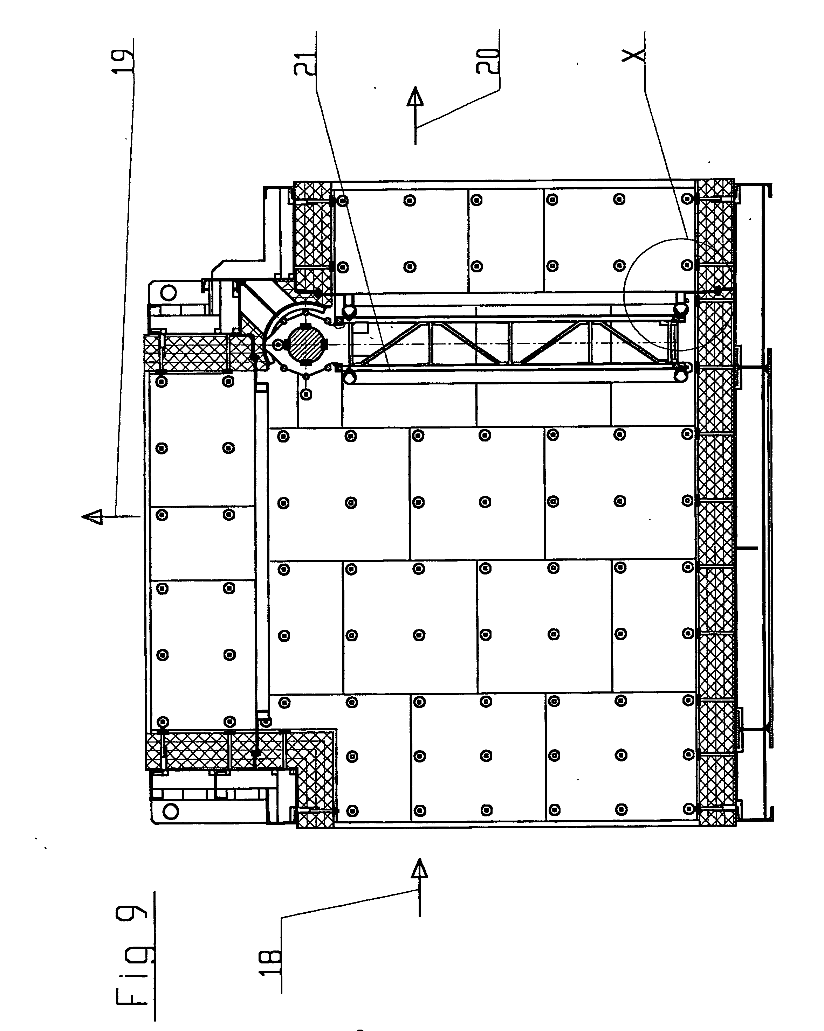

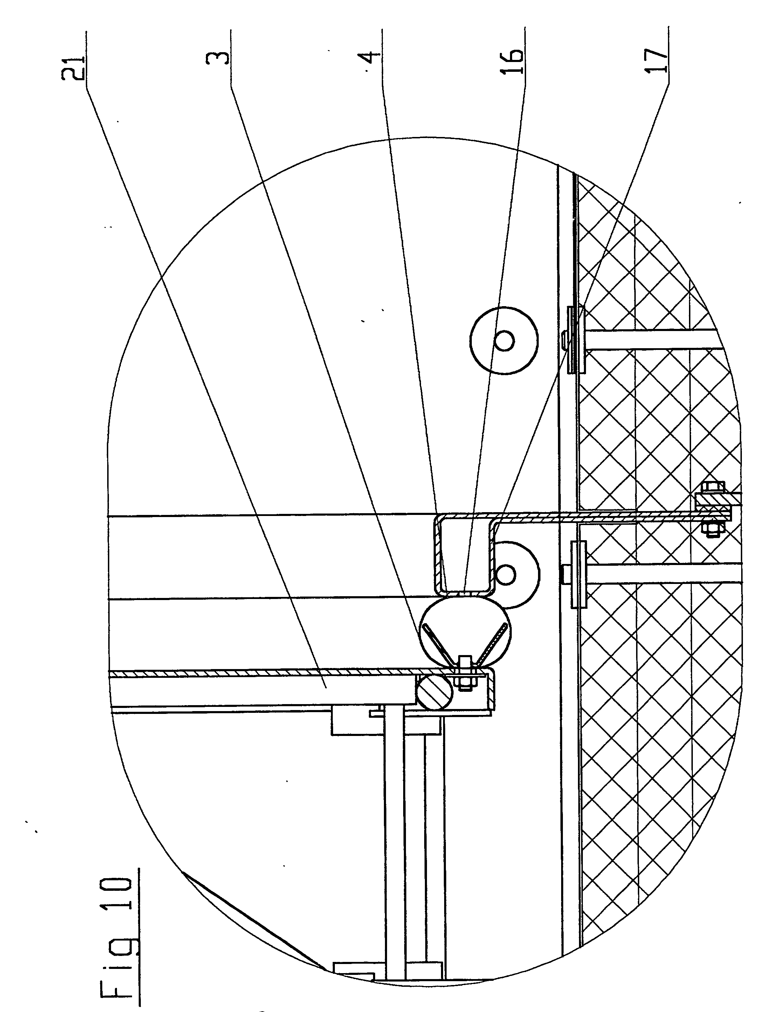

In den Fig.9 und 10 ist ein weiterer Anwendungsfall für die oben beschriebene Abdichtvorrichtung dargestellt. Fig.9 zeigt eine Aufsicht einer Verzweigung einer Heißgasrohrleitung. Dabei strömt das Heißgas gemäß Pfeil 18 in diesen Verzweigungsbereich ein und wird dann je nach Stellung einer Schwenkklappe 21 entweder in Richtung des Pfeils 19 oder in Richtung des Pfeils 20 weitergeleitet. Im dargestellten Ausführungsbeispiel würde das Heißgas in Richtung des Pfeils 19 abgeleitet werden. Die Schwenkklappe 21 kann somit wahlweise den einen oder anderen Abzweig absperren. Zur Gewährleistung einer gasdichten Abdichtung ist wiederum eine Abdichtvorrichtung vorgesehen, die beispielsweise nach einem der oben beschriebenen Ausführungsbeispiele ausgebildet sein kann.

Gemäß Fig.10 ist das Dichtungselement 3 hier an der Schwenkklappe 21 angebracht und wirkt mit einer entsprechenden Gegenfläche 4 zusammen. Die Gegenfläche weist wiederum Mittel zur Zuführung von Sperrluft auf, die durch einen Schlitz 16 gebildet werden, der in der Gegenfläche 4 mündet. Die Sperrluft wird dabei beispielsweise über einen Hohlprofilkörper 17 zugeführt, wobei die Gegenfläche 4 auf einer Außenfläche des Hohlprofilkörpers 17 ausgebildet ist.

Die Mittel zur Zuführung von Sperrluft können im Bedarfsfall auch bei den anderen beschriebenen Ausführungsbeispielen (Fig.1 bis 4) vorgesehen werden. In den Fig.1 und 2 ist daher ein entsprechender Schlitz 16 in der Gegenfläche angedeutet.

Selbstverständlich ist die erfindungsgemäße Abdichtvorrichtung auch ohne Zuführung von Sperrluft verwendbar. Bei Verwendung von Sperrluft können jedoch hundertprozentige Abdichtungen erreicht werden. Dabei besteht jedoch nicht die Notwendigkeit, die Sperrluft im Bereich der Berührungszone zuzuführen. Es wäre auch denkbar, zwei Dichtungselemente nebeneinander anzuordnen, die in der Schließstellung an einer gemeinsamen Gegenfläche anliegen. Der Schlitz für die Sperrluft könnte dann in den Raum zwischen den beiden Dichtungselementen münden.

Die in den Fig.8 und 10 dargestellte Variante, bei der die Sperrluft im Bereich der Berührungszone von Dichtelement und Gegenfläche zugeführt wird, ist jedoch mit erheblich weniger Aufwand zu realisieren. Dies setzt jedoch voraus, daß sich das Dichtungselement derart an der Gegenfläche anlegt, daß sich eine ausreichend breite Berührungszone ausbildet.

Wenngleich sich das im Querschnitt kreisförmige Dichtungselement 3 in besonderem Maße für die Zuführung von Sperrluft im Bereich der Berührungszone eignet, sind jedoch auch andere Querschnittsformen von Dichtungselementen denkbar, wobei jedoch für eine gute Abdichtung auf eine möglichst breite Berührungszone geachtet werden sollte.

## Patentansprüche

1. Vorrichtung zur Abdichtung der Berührungszone zwischen zwei relativ zueinander beweglichen Anlagenteilen (1, 2), enthaltend ein erstes Anlagenteil (1), ein zweites Anlagenteil (2), ein sich entlang der Berührungszone erstreckendes, am ersten Anlagenteil (1) befestigtes Dichtungselement (3) sowie eine am zweiten Anlagenteil (2) vorgesehene und in einer Schließstellung der beiden Anlagenteile mit dem Dichtungselement in Berührung kommende Gegenfläche (4), wobei das Dichtungselement durch einen feder-elastischen Hohlprofilkörper gebildet wird, der quer zu seiner Längserstreckung einen in einer Öffnungsstellung der beiden Anlagenteile bogenförmig gekrümmten Teilbereich aufweist, der sich in der Schließstellung der beiden Anlagenteile federnd an die Gegenfläche anlegt, wobei der Hohlprofilkörper durch ein im Querschnitt geschlossenes Profil aus Federstahl gebildet wird, der - in der Öffnungsstellung der beiden Anlagenteile - quer zu seiner Längserstreckung einen kreisförmigen Querschnitt aufweist,
**gekennzeichnet durch** im Hohlprofil angeordnete und am ersten Anlagenteil befestigte Mittel zur Stabilisierung des Hohlprofilkörpers, die in der Öffnungsstellung der beiden Anlagenteile mit ihren Endbereichen an gegenüberliegenden Bereichen der Innenwandung des Hohlprofilkörpers anliegen und in der Schließstellung nicht mit der Innenwandung des Dichtungselementes in Berührung kommen.

2. Vorrichtung nach Anspruch 1, **dadurch gekennzeichnet, dass** im Inneren des Hohlprofilkörpers wenigstens eine Klemmleiste vorgesehen ist, die über Aussparungen im Hohlprofilkörper am ersten Anlagenteil zur Halterung des Dichtelements (3) befestigt ist.

3. Vorrichtung nach einem oder mehreren der vorhergehenden Ansprüche, **dadurch gekennzeichnet, dass** das Dichtungselement (3) im Bereich seiner Befestigung am ersten Anlagenteil (1) Aussparungen aufweist, durch die Mittel zur Befestigung des Dichtungselements am ersten Anlagenteil hindurchgreifen.

4. Vorrichtung nach Anspruch 2, **dadurch gekennzeichnet, dass** die Klemmleiste (6) und die Stabilisierungsmittel einstückig ausgebildet sind.

5. Vorrichtung nach einem oder mehreren der vorhergehenden Ansprüche, **gekennzeichnet**, dass die Mittel zur Stabilisierung des Hohlprofilkörpers, im Querschnitt wenigstens zwei Schenkel (9.1, 9.2) aufweisen, die in der Öffnungsstellung der beiden Anlagenteile mit ihren Endbereichen an gegenüberliegenden Bereichen der Innenwandung des Hohlprofilkörpers anliegen.

6. Vorrichtung nach einem oder mehreren der vorhergehenden Ansprüche, **dadurch gekennzeichnet, dass** zur Erhöhung der Federkraft des Dichtungselements ein Federstahlblech in das Dichtungselement einschiebbar ist, das an der Innenwandung des Dichtungselements (3) anliegt.

7. Vorrichtung nach einem oder mehreren der vorhergehenden Ansprüche, **dadurch gekennzeichnet, dass** im Dichtungselement (3) ein zweiter innerer Hohlprofilkörper (11) mit kleinerem kreisförmigen Querschnitt derart angeordnet ist, dass beim Schließvorgang zunächst der äußere Hohlprofilkörper bei Berührung der Gegenfläche (4) verformt wird und mit zunehmender Verformung des äußeren Hohlprofilkörpers auch der innere Hohlprofilkörper (11) verformt wird.

8. Vorrichtung zur Abdichtung der Berührungszone zwischen zwei relativ zueinander beweglichen Anlagenteilen (1, 2), enthaltend ein erstes Anlagenteil (1), ein zweites Anlagenteil (2), ein sich entlang der Berührungszone erstreckendes, am ersten Anlagenteil (1) befestigtes Dichtungselement (3) sowie eine am zweiten Anlagenteil (2) vorgesehene und in einer Schließstellung der beiden Anlagenteile mit dem Dichtungselement in Berührung kommende Gegenfläche (4), wobei das Dichtungselement durch einen feder-elastischen Hohlprofilkörper gebildet wird, der quer zu seiner Längserstreckung einen in einer Öffnungsstellung der beiden Anlagenteile bogenförmig gekrümmten Teilbereich aufweist, der sich in der Schließstellung der beiden Anlagenteile federnd an die Gegenfläche anlegt, wobei der Hohlprofilkörper durch ein im Querschnitt geschlossenes Profil aus Federstahl gebildet wird, der - in der Öffnungsstellung der beiden Anlagenteile - quer zu seiner Längserstreckung einen kreisförmigen Querschnitt aufweist,
**dadurch gekennzeichnet, dass** im Dichtungselement (3) ein zweiter innerer Hohlprofilkörper (11) mit kleinerem kreisförmigen Querschnitt derart angeordnet ist, dass beim Schließvorgang zunächst der äußere Hohlprofilkörper bei Berührung der Gegenfläche (4) verformt wird und mit zunehmender Verformung des äußeren Hohlprofilkörpers auch der innere Hohlprofilkörper (11) verformt wird.

9. Vorrichtung nach einem oder mehreren der vorhergehenden Ansprüche, **dadurch gekennzeichnet, dass** die Gegenfläche (4) eben ausgebildet ist und das Dichtungselement (3) in der Schließstellung derart verformt ist, dass es in der Berührungszone plan an der Gegenfläche anliegt.

10. Vorrichtung nach einem oder mehreren der vorhergehenden Ansprüche, **dadurch gekennzeichnet, dass** die Gegenfläche (4) entlang der Berührungszone Mittel zur Zuführung von Sperrluft aufweist.

11. Vorrichtung nach einem oder mehreren der vorhergehenden Ansprüche, **dadurch gekennzeichnet, dass** die Gegenfläche (4) entlang der Berührungszone einen Schlitz (16) zur Zuführung von Sperrluft aufweist.

12. Vorrichtung nach einem oder mehreren der vorhergehenden Ansprüche, **dadurch gekennzeichnet, dass** die Gegenfläche (4) durch eine Außenfläche eines Hohlprofilkörpers (17) gebildet wird, der einen in der Außenfläche mündenden und sich entlang der Berührungszone erstreckenden Schlitz aufweist, über den Sperrluft zuführbar ist.

13. Vorrichtung nach einem oder mehreren der vorhergehenden Ansprüche, **dadurch gekennzeichnet, dass** der Anlagenteil (1) im Bereich der Befestigung des Dichtungselements (3) derart ausgebildet ist, dass sich das Dichtungselement in der Schließstellung am ersten Anlagenteil abstützt.

## Claims

1. Device for sealing the contact zone between two installation components (1, 2) that are movable relative to each other, which device contains a first installation component (1), a second installation component (2), a sealing element (3) which extends along the contact zone and which is secured to the first installation component (1), and a counter-face (4) which is provided on the second installation component (2) and which comes into contact with the sealing element when the two installation components are in a closed position, the sealing element being formed by a resilient hollow sectional member which has, transverse to its longitudinal extent, a portion which is curved in the shape of an arc when the two installation components are in an open position and which abuts the counter-face resiliently when the two installation components are in the closed position, the hollow sectional member being formed by a spring-steel section which is closed in cross-section and which - when the two installation components are in the open position - has a circular cross-section transverse to its longitudinal extent,
**characterised by** means, located in the hollow sectional member and secured to the first installation component, for stabilising the hollow sectional member, which means, in the open position of the two installation components, abut by way of their end regions opposite regions of the inner wall of the hollow sectional member and, in the closed position, do not come into contact with the inner wall of the sealing element.

2. Device according to claim 1, **characterised in that** at least one clamping strip is provided inside the hollow sectional member and is secured to the first installation component by way of openings in the hollow sectional member in order to hold the sealing element (3).

3. Device according to any one or more of the preceding claims, **characterised in that** the sealing element (3) has, in the region where it is secured to the first installation component (1), openings through which means for securing the sealing element to the first installation component engage.

4. Device according to claim 2, **characterised in that** the clamping strip (6) and the stabilising means are formed in one piece.

5. Device according to any one or more of the preceding claims, **characterised in that** the means for stabilising the hollow sectional member have, in cross-section, at least two limbs (9.1, 9.2) which, when the two installation components are in the open position, abut with their end regions opposite regions of the inner wall of the hollow sectional member.

6. Device according to any one or more of the preceding claims, **characterised in that**, in order to increase the resilient force of the sealing element, a piece of sheet spring steel can be inserted into the sealing element and abuts the inner wall of the sealing element (3).

7. Device according to any one or more of the preceding claims, **characterised in that** a second, inner, hollow sectional member (11) having a smaller circular cross-section is arranged in the sealing element (3) in such a manner that, during the closing operation, first the outer hollow sectional member is deformed on coming into contact with the counter-face (4) and, as the deformation of the outer hollow sectional member increases, the inner hollow sectional member (11) is also deformed.

8. Device for sealing the contact zone between two installation components (1, 2) that are movable relative to each other, which device contains a first installation component (1), a second installation component (2), a sealing element (3) which extends along the contact zone and which is secured to the first installation component (1), and a counter-face (4) which is provided on the second installation component (2) and which comes into contact with the sealing element when the two installation components are in a closed position, the sealing element being formed by a resilient hollow sectional member which has, transverse to its longitudinal extent, a portion which is curved in the shape of an arc when the two installation components are in an open position and which abuts the counter-face resiliently when the two installation components are in the closed position, the hollow sectional member being formed by a spring-steel section which is closed in cross-section and which - when the two installation components are in the open position - has a circular cross-section transverse to its longitudinal extent,
**characterised in that** a second, inner, hollow sectional member (11) having a smaller circular cross-section is arranged in the sealing element (3) in such a manner that, during the closing operation, first the outer hollow sectional member is deformed on coming into contact with the counter-face (4) and, as the deformation of the outer hollow sectional member increases, the inner hollow sectional member (11) is also deformed.

9. Device according to any one or more of the preceding claims, **characterised in that** the counter-face (4) is formed flat and the sealing element (3), in the closed position, is deformed in such a manner that it lies flat against the counter-face in the contact zone.

10. Device according to any one or more of the preceding claims, **characterised in that** the counter-face (4) has, along the contact zone, means for supplying shut-off air.

11. Device according to any one or more of the preceding claims, **characterised in that** the counter-face (4) has, along the contact zone, a slot (16) for supplying shut-off air.

12. Device according to any one or more of the preceding claims, **characterised in that** the counter-face (4) is formed by an outer face of a hollow sectional member (17) having a slot which opens out in the outer face and extends along the contact zone and by way of which shut-off air can be supplied.

13. Device according to any one or more of the preceding claims, **characterised in that** the installation component (1) is formed in such a manner in the region where the sealing element (3) is secured that the sealing element, in the closed position, is supported on the first installation component.

## Revendications

1. Dispositif pour l'étanchement de la zone de contact entre deux parties d'installation (1, 2) mobiles l'une par rapport à l'autre, comprenant une première partie d'installation (1), une deuxième partie d'installation (2), un élément d'étanchéité (3) qui, s'étendant le long de la zone de contact, est fixé à la première partie d'installation (1), ainsi qu'une contre-surface (4), prévue sur la deuxième partie d'installation (2) et entrant en contact avec l'élément d'étanchéité dans une position de fermeture des deux parties d'installation, l'élément d'étanchéité étant formé par un corps en profilé creux élastique qui présente, perpendiculairement à son étendue longitudinale, un domaine partiel, coudé en forme d'arc dans une position d'ouverture des deux parties d'installation, lequel, dans la position de fermeture des deux parties d'installation, vient porter contre la contre-surface, en faisant ressort, le corps profilé creux étant formé par un profilé en acier à ressort, présentant une section transversale fermée, qui - dans la position d'ouverture des deux parties d'installation - présente une section transversale circulaire, perpendiculaire à son étendue longitudinale,
**caractérisé par** des moyens de stabilisation du corps en profilé creux disposés dans le profilé creux et fixés à la première partie d'installation, lesquels, dans la position d'ouverture des deux parties d'installation, portent, avec leurs sections d'extrémité, contre des domaines de la paroi intérieure du corps en profilé creux, opposés, et, dans la position de fermeture, n'entrent pas en contact avec la paroi intérieure de l'élément d'étanchéité.

2. Dispositif selon la revendication 1,
**caractérisé en ce que**,
à l'intérieur du corps en profilé creux, est prévue au moins une barre de serrage qui est fixée, par des évidements, dans le corps en profilé creux, à la première partie d'installation pour maintenir l'élément d'étanchéité (3).

3. Dispositif selon l'une ou plusieurs des revendications précédentes,
**caractérisé en ce que**
l'élément d'étanchéité (3), dans le domaine de sa fixation à la première partie d'installation (1), présente des évidements dans lesquels s'engagent les moyens de fixation pour fixer l'élément d'étanchéité à la première partie d'installation.

4. Dispositif selon la revendication 2,
**caractérisé en ce que**
la barre de serrage (6) et les moyens de stabilisation sont formés d'une seule pièce.

5. Dispositif selon l'une ou plusieurs des revendications précédentes,
**caractérisé en ce que**
les moyens de stabilisation du corps en profilé creux présentent, en coupe transversale, au moins deux bras (9.1, 9.2) qui, dans la position d'ouverture des deux parties d'installation, portent contre les domaines opposés de la paroi intérieure du corps en profilé creux, avec leurs sections d'extrémité.

6. Dispositif selon l'une ou plusieurs des revendications précédentes,
**caractérisé en ce que**,
pour augmenter la force élastique de l'élément d'étanchéité, une lame en acier à ressort peut être insérée dans l'élément d'étanchéité, laquelle porte contre la paroi intérieure de l'élément d'étanchéité (3).

7. Dispositif selon l'une ou plusieurs des revendications précédentes,
**caractérisé en ce que**,
dans l'élément d'étanchéité (3), un deuxième corps (11) en profilé creux, interne, à section transversale circulaire plus petite, est disposé de telle manière que, lors du processus de fermeture, le corps en profilé creux externe est tout d'abord déformé en entrant en contact avec la contre-surface (4), et qu'avec la déformation croissante du corps en profilé creux externe, le corps interne (11) en profilé creux est aussi déformé.

8. Dispositif pour l'étanchement de la zone de contact entre deux parties d'installation (1, 2) mobiles l'une par rapport à l'autre, comprenant une première partie d'installation (1), une deuxième partie d'installation (2), un élément d'étanchéité (3) qui, s'étendant le long de la zone de contact, est fixé à la première partie d'installation (1), ainsi qu'une contre-surface (4), prévue sur la deuxième partie d'installation (2) et entrant en contact avec l'élément d'étanchéité dans une position de fermeture des deux parties d'installation, l'élément d'étanchéité étant formé par un corps en profilé creux élastique qui présente, perpendiculairement à son étendue longitudinale, un domaine partiel, coudé en forme d'arc dans une position d'ouverture des deux parties d'installation, lequel, dans la position de fermeture des deux parties d'installation, vient porter contre la contre-surface, en faisant ressort, le corps profilé creux étant formé par un profilé en acier à ressort, présentant une section transversale fermée, qui - dans la position d'ouverture des deux parties d'installation - présente une section transversale circulaire, perpendiculaire à son étendue longitudinale,
**caractérisé en ce que**,
dans l'élément d'étanchéité (3), un deuxième corps (11) en profilé creux, interne, à section transversale circulaire plus petite, est disposé de telle manière que, lors du processus de fermeture, le corps en profilé creux externe est tout d'abord déformé en entrant en contact avec la contre-surface (4), et qu'avec la déformation croissante dudit corps en profilé creux externe, le corps interne (11) en profilé creux est aussi déformé.

9. Dispositif selon l'une ou plusieurs des revendications précédentes,
**caractérisé en ce que**
la contre-surface (4) est de conception plane et que l'élément d'étanchéité (3), dans le position de fermeture, est déformé de telle manière qu'il porte à plat contre la contre-surface, dans la zone de contact.

10. Dispositif selon l'une ou plusieurs des revendications précédentes,
**caractérisé en ce que**
la contre-surface (4) présente, le long de la zone de contact, des moyens d'amenée d'air de confinement.

11. Dispositif selon l'une ou plusieurs des revendications précédentes,
**caractérisé en ce que**
la contre-surface (4) présente, le long de la zone de contact, une fente (16) pour l'amenée d'air de confinement.

12. Dispositif selon l'une ou plusieurs des revendications précédentes,
**caractérisé en ce que**
la contre-surface (4) est formée par une face extérieur d'un corps (17) en profilé creux qui présente une fente débouchant dans la surface extérieure et s'étendant le long de la zone de contact, par l'intermédiaire de laquelle l'air de confinement peut être amené.

13. Dispositif selon l'une ou plusieurs des revendications précédentes,
**caractérisé en ce que**
la pièce d'installation (1) est conçue, dans la région de fixation de l'élément d'étanchéité (3), de telle manière que ledit élément d'étanchéité s'appuie sur la première partie d'installation, dans la position de fermeture.
